# EUROPÄISCHE PATENTSCHRIFT

(11) **EP 1 647 430 B1**
(45) Veröffentlichungstag und Bekanntmachung des Hinweises auf die Patenterteilung: **10.09.2008**
(21) Anmeldenummer: 05017822.7
(22) Anmeldetag: 17.08.2005
(51) Int. Cl.: B60J 7/04, B60J 7/047

(54) **Dachanordnung für ein Fahrzeug**
Roof arrangement for a vehicle
Agencement de toiture pour un véhicule

(30) Priorität: 15.10.2004 DE 102004050609
(43) Veröffentlichungstag der Anmeldung: 19.04.2006
(73) Patentinhaber: Dr. Ing. h.c. F. Porsche Aktiengesellschaft, 70435 Stuttgart (DE)
(72) Erfinder: Braun, Wolfgang, 73061 Ebersbach (DE); Armbruster, Reiner, 75417 Mühlacker (DE)

(56) Entgegenhaltungen:
- EP-A- 1 291 217
- EP-A2- 1 279 536
- DE-A1- 10 121 888
- DE-C- 585 481
- DE-C1- 19 938 605

## Beschreibung

Die Erfindung bezieht sich auf eine Dachanordnung für ein Fahrzeug, insbesondere einen Personenkraftwagen, gemäß Oberbegriff des Anspruchs 1.

Aus der DE 101 21 888 A1 ist eine gattungsbildende Dachanordnung bekannt. Diese besitzt einen Dachrahmen mit seitlichen Führungsbahnen und einen Schiebedeckel, der in den Führungsschienen zum zumindest teilweise Freigeben oder zum Verschließen einer Dachöffnung verfahrbar geführt ist. Ferner umfasst die Dachordnung Lagereinrichtungen, die einerseits am Schiebdeckel angelenkt und andererseits über Führungselemente in den Führungsbahnen abgestützt sind. Jede Lagereinrichtung weist einen Hebel auf, der sowohl schiebedeckelseitig als auch führungsbahnseitig in einem Drehlager befestigt ist. Das schiebdeckelseitige Drehlager besitzt eine Lagerachse, die mit ihrem einen Ende in eine seitliche Steuerbahn hineinragt, die beim Verfahren des Schiebdeckels dessen zusätzliche Hubbewegung steuert. Auf dieses Ende der Lagerachse ist eine gestufte Lagerhülse aus einem Gleitlagerwerkstoff aufgesetzt.

Die DE 199 38 605 C1 beschreibt einen Schiebedeckel, der über einen unbeweglichen Arm in Führungsbahnen geführt ist. Zwischen dem Schiebedeckel und dem Arm ist ein in axialer Richtung begrenzt bewegbarer Bolzen vorgesehen, der über eine Federeinrichtung in Form einer Schraubenfeder nach seitlich außen gedrängt wird, wodurch der Schiebedeckel zwischen seinen sich gegenüberliegenden Armen zentriert wird. Dabei müssen die seitlichen Arme die Kräfte aus der seitlichen Schiebedeckelbewegung und Zentrierkräfte aufnehmen, die von der Federeinrichtung aufgebracht werden.

Aufgabe der Erfindung ist es, eine Dachanordnung der eingangs genannten Art anzugeben, bei der der Schiebdeckel insbesondere in seiner die Dachöffnung verschließenden Stellung wenig Geräusche verursacht.

Gelöst wird diese Aufgabe mit einer Dachanordnung, die die in Anspruch 1 genannten Merkmale aufweist. Weitere Ausgestaltungen der Erfindung sind in den Unteransprüchen angegeben.

Die mit der Erfindung hauptsächlich erzielten Vorteile sind darin zu sehen, dass durch eine Federeinrichtung der Schiebedeckel seitlich, also in Fahrzeugquerrichtung, zwischen den Steuerbahnen eingespannt wird, wodurch eine Bewegung des Schiebdeckel in Fahrzeugquerrichtung zumindest reduziert wird. Der Schiebedeckel wird in seiner Schließstellung fest in der Dachöffnung gehalten.

Vorteile, die sich aus den in den Unteransprüchen angegebenen Ausgestaltungen ergeben, sind in der nachfolgenden ausführlichen Beschreibung der Erfindung angeführt, die nachfolgend anhand von Ausführungsbeispielen mit Bezug auf die Zeichnung näher erläutert wird. Es zeigen:
Fig. 1 ein Personenkraftwagen mit einer Dachanordnung und
Fig. 2 die Dachanordnung in Schnittdarstellung entlang der Linie II-II in Fig. 1.

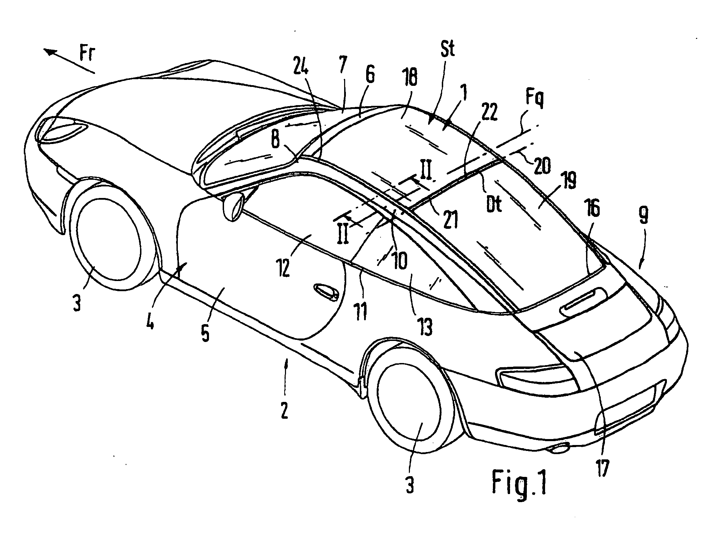

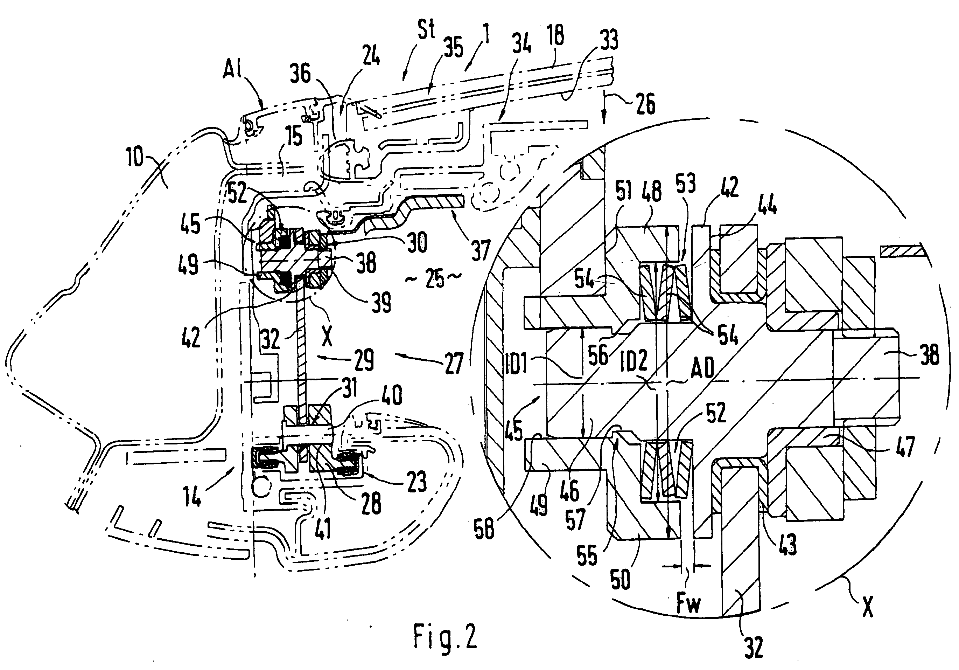

Anhand der Figuren 1, 2 und der Einzelheit X in Fig. 2 wird eine Dachanordnung 1 beschrieben, die an einem Fahrzeug, insbesondere Personenkraftwagen 2, vorgesehen ist, der einen von Rädern 3 getragenen Aufbau 4 umfasst. Der Aufbau 4 weist einen Grundkörper 5 und einen Windschutzscheibenrahmen 6 auf, in den eine Windschutzscheibe 7 eingesetzt ist. Von den oberen Ecken 8 des Windschutzscheibenrahmens 6 erstrecken sich in Richtung des Hecks 9 seitliche Dachlängsholme 10 des Aufbaus 4, die etwa bogenförmig verlaufen, so dass der Aufbau 4 die Form eines Coupes mit Fließheck besitzt. Zwischen den seitlichen Dachlängsholmen 10 und einer darunter liegenden Gürtellinie 11 des Aufbaus 4 sind Seitenscheiben 12 und 13 eingesetzt.

Die Dachanordnung 1 ist zwischen den seitlichen Dachlängsholmen 10 angeordnet und besitzt - gemäß Fig. 2 - einen Dachrahmen 14, der, beispielsweise durch eine umlaufende Verklebung 15, mit dem Aufbau 4 verbunden ist. Der Dachrahmen 14 ist vorzugsweise umflaufend ausgebildet und erstreckt sich vom Windschutzscheibenrahmen 6 bis zu einem vorderen Randbereich 16 vor einer Motorraumzugangsklappe 17. Denkbar wäre es allerdings auch, dass die Dachlängsholme 10 den Dachrahmen bilden.

Die Dachanordnung 1 weist wenigstens einen - in Fahrtrichtung Fr gesehen - vorderen, verlagerbaren Schiebedeckel 18 auf, der starr ausgebildet sein kann und der - in Schließstellung St - an den Windschutzscheibenrahmen 6 und einen hinteren Dachteil 19 angrenzt, der vorzugsweise unverschiebbar am Aufbau 4 bzw. am Dachrahmen 14 befestigt ist. Der hintere Dachteil 19 der Dachanordnung 1 ist in bevorzugter Ausführungsform die Heckscheibe des Fahrzeugs. Es kann vorgesehen sein, dass der hintere Dachteil 19 um eine parallel zur Fahrzeugquerachse Fq verlaufende Klappachse 20 geöffnet werden kann. Vorzugsweise ist zwischen der hinteren Kante 21 des Schiebedeckels 18 und der vorderen Kante 22 des hinteren Dachteils 19 lediglich eine Dichtung Dt vorgesehen.

Der - vorzugsweise durchsichtige - Schiebedeckel 18 ist in seitlichen Führungsbahnen 23, die am Dachrahmen 14 oder an den Längsholmen 10 angebracht sein können, zum Verschließen oder zumindest teilweise Freigeben einer Dachöffnung 24 verfahrbar geführt derart, dass er unter dem hinteren Dachteil 19 abgelegt werden kann. Hierfür ist vorgesehen, den Schiebedeckel 18 zunächst in Richtung des Fahrzeuginnenraums 25 in Pfeilrichtung 26 abzusenken und anschließend nach hinten unter den Dachteil 19 zu verschieben. Für das Absenken in Pfeilrichtung 26 ist der Schiebedeckel 18 über mehrere eine Schwenkbewegung des Deckels 18 ermöglichende Lagereinrichtungen 27 in den Führungsbahnen 23 abgestützt. Vorzugsweise sind in jeder Führungsbahn 23 zwei - in Fahrtrichtung Fr hintereinander angeordnete - Lagereinrichtungen 27 gleitend geführt. Jede Lagereinrichtung 27 ist einerseits am Schiebedeckel 18 und andererseits über ein Führungselement 28 in einer der Führungsbahnen 23 abgestützt. Jede Lagereinrichtung 27 besitzt eine Hebelanordnung 29, die sowohl am Führungselement 28 als auch am Schiebedeckel 18 in einem Schwenk- bzw. Drehlager 30 bzw. 31 drehbar angelenkt ist. Die Hebelanordnung 29 umfasst zumindest einen in den Drehlagern 30 und 31 schwenkbar gelagerten Hebel 32. Durch die Hebelanordnung 29 kann der Schiebedeckel 28 in Pfeilrichtung 26 abgesenkt werden. Entlang den Führungsbahnen 23 kann er dann nach hinten unter den Dachteil 19 gefahren werden.

Der Schiebedeckel 18 weist an seiner dem Fahrzeuginnenraum 25 zugewandten Seite 33 einen Stützrahmen 34 auf, der an der Deckelinnenseite 33 befestigt ist. Der Stützrahmen 34 ist im Deckelrandbereich 35 vorgesehen und läuft in diesem Deckelrandbereich 35 vorzugsweise vollständig um. An dem Stützrahmen 34 kann eine um den Rand des Deckels 18 umlaufende Dichtung 36 angebracht sein, die den Schiebedeckel 18 zur Begrenzung der Dachöffnung 24 hin abdichtet. Die Dichtung Dt kann Bestandteil der Dichtung 36 sein. Eine Abdeckleiste Al kann den freien Raum zwischen Dachlängsholm 10 und Deckel 18 über der Dichtung 36 überspannen.

Die Lagereinrichtung 27 besitzt einen Lagerblock 37, der an dem Stützrahmen 34 befestigt oder einstückig mit diesem ausgebildet ist. Die Hebelanordnung 29 ist mit einer ersten Lagerachse 38 des schiebedeckelseitigen Drehlagers 30 in einem Lagerauge 39 des Lagerblocks 37 drehbeweglich befestigt. Die Hebelanordnung 29 ist außerdem mit einer zweiten Lagerachse 40 in einem Lagerauge 41 des führungsbahnseitigen Drehlagers 31 drehbeweglich befestigt. Die Lagerachsen 38 und 40 verlaufen parallel zur Fahrzeugquerachse Fq. Die Hebelanordnung 29 ist mithin sowohl mit dem Schiebedeckel 18 als auch dem Führungselement 28 schwenkbeweglich verbunden. Die Lagerachse 38 weist etwa mittig noch eine ggf. einstückig mit ihr ausgebildete Scheibe 42 auf. Zwischen der Lagerachse 38 und dem Lagerauge 39 des Hebels 32 ist noch ein im Querschnitt U - förmiges Ringelement 43 angeordnet, an dem auch die Scheibe 42 mit einer Seite 44 anliegen kann.

Für die Steuerung der Hubbewegung in Pfeilrichtung 26 und umgekehrt des Schiebedeckels 18 ist eine seitlich am Dachrahmen 14 angeordnete Steuerbahn 45 vorgesehen, in die ein Bolzenabschnitt 46 der Lagerachse 38 hineinragt. Vorzugsweise sind der Bolzenabschnitt 46 und die erste Lagerachse 38 einstückig ausgebildet und durchsetzen den Hebel 32. Der Bolzen 46 bzw. die Lagerachse 38 sind in dem Lagerauge 39, vorzugsweise durch Zwischenschalten einer Lagerhülse, insbesondere Gleithülse 47, drehbeweglich gehalten. Ferner ist eine gestufte Lagerhülse 48, vorzugsweise aus einem Gleitlagerwerkstoff, auf dem in die Steuerbahn 45 hineinragenden Ende des Bolzens 46 angeordnet. Die Lagerhülse 48 weist außer dem in die Steuerbahn 45 hineinragenden Hülsenabschnitt 49 noch einen Ringkragen 50 auf, der gegenüber dem Hülsenabschnitt 49 mit größerem Außendurchmesser AD ausgeführt ist, so dass - wie vorstehend erwähnt - die Lagerhülse 48 gestuft ausgeführt ist. Der Ringkragen 50 liegt benachbart zur Scheibe 42. Der Außendurchmesser AD des Ringkragens 50 ist so ausgeführt, dass der Ringkragen 50 in jeder Bewegungsstellung des Schiebedeckels 18 zumindest bereichsweise auf einem die Steuerbahn 45 begrenzenden Rand 51 aufliegt. Es ist ferner vorgesehen, zwischen der Lagerhülse 48 und dem Hebel 32, insbesondere der Scheibe 42 eine Federeinrichtung 52 anzuordnen, die die Lagerhülse in Richtung Steuerbahn 45 drängt. Durch den in seinem Außendurchmesser AD entsprechend ausgebildeten Ringkragen 50 wird verhindert, dass die Lagerhülse 48 aufgrund der von der Federeinrichtung 52 aufgebrachten Kraft vollständig in die Steuerbahn 45 hinein gedrückt wird und sich darin verklemmen könnte. Zusätzlich wird der Schiebedeckel 18 durch die von der Federeinrichtung 52 aufgebrachte Kraft in Fahrzeugquerrichtung Fq zwischen den seitlichen Steuerbahnen 45 eingespannt, wodurch er insbesondere in seiner Schließstellung St fest in der Dachöffnung 24 gehalten ist und so zur Geräuschminimierung beträgt. Die Federeinrichtung 52 ist dafür in Richtung der Fahrzeugquerachse Fq vorgespannt, so dass die Lagerhülse 48 mit entsprechender Vorspannkraft gegen den Rand 51 gedrängt wird. Die Federeinrichtung 52 wird vorzugsweise durch ein Tellerfederpaket 53 gebildet, das mehrere Tellerfedern 54, beispielsweise aus Stahl, aufweist. Dabei sind die Tellerfedern 54 mit ihrer Wölbung wechselweise angeordnet. Die als Ring ausgeführten Tellerfedern 54 sind auf dem Bolzen 46 zwischen Lagerhülse 48 und Hebel 32 bzw. Scheibe 42 angeordnet.

Die Lagerhülse 48 weist im Hülsenabschnitt 49 und im Ringkragen 50 jeweils einen unterschiedlichen Innendurchmesser ID1 und ID2 auf, wobei der Innendurchmesser ID1 kleiner als der Innendurchmesser ID2 und außerdem an den Außendurchmesser des Bolzens 46 angepasst ist. Durch den größeren Innendurchmesser ID2 im Ringkragen 50 kann dort die Federeinrichtung 52 zumindest teilweise aufgenommen sein. Der Außendurchmesser der Tellerfedern 54 ist mithin kleiner als der Innendurchmesser ID2.

Für eine einfache Montage der Federeinrichtung 52 und der Lagerhülse 48 ist zwischen Bolzen 46 und Lagerhülse 48 eine Schnapp - bzw. Rasteinrichtung 55 vorgesehen, die die Lagerhülse 48 auf dem Bolzen rastend hält. Der Bolzen kann für die Rasteinrichtung 55 ein Kerbe 56 aufweisen, in die eine Nase 57 eingreift, die an der Innenseite 58 der Lagerhülse 48 hervorspringt und somit der Rasteinrichtung 55 zugeordnet ist. Die Nase 57 und/oder die Kerbe 56 können umlaufend oder nur abschnittweise ausgebildet sein.

Durch die Lage der Rasteinrichtung 55 wird außerdem ein Federweg Fw zwischen Lagerhülse 48 und Scheibe 42 bzw. Hebel 32 bereitgestellt, der zwischen einer Stirnseite 59 des Ringkragens 50 und der Scheibe 42 gemessen wird. Dieser Federweg Fw ist vorzugsweise so bemessen, dass die Federeinrichtung 52 nicht überlastet bzw. ,,auf Block" gebracht werden kann, so dass durch den Federweg Fw eine Federkraftbegrenzung erreicht wird, wenn die Stirnseite 59 auf der Scheibe 42 anliegt. Sofern keine Scheibe 42 verwendet wird, gelten die vorstehenden Ausführung für den Hebel, an dem sich dann die Federeinrichtung 52 abstützt. Durch die Scheibe 42 und das Ringelement 43 wird jedoch eine Entkopplung zwischen Federeinrichtung 42 und Hebel erreicht, so dass das Drehen des Hebels 32 um die Lagerachse 38 ohne größeren Widerstand erfolgen kann. Überdies ist die Federeinrichtung 52 so vorgespannt, dass die daraus resultierende Federkraft noch ein Gleiten der Lagerhülse 48 in der Steuerbahn 45 bzw. auf dem Rand 51 erlaubt.

## Patentansprüche

1. Dachanordnung (1) für ein Fahrzeug, insbesondere Personenkraftwagen (2), mit einem Dachrahmen (14), einem Schiebedeckel (18), zwei seitlichen Führungsbahnen (23), in denen der Schiebedeckel zum Verschließen oder zumindest teilweise Freigeben einer Dachöffnung (24) verfahrbar geführt ist, welcher Schiebedeckel mit mehreren Lagereinrichtungen (27) zusammenwirkt, von denen jede Lagereinrichtung einerseits am Schiebedeckel angelenkt und andererseits über ein Führungselement (28) in einer der Führungsbahnen abgestützt ist, welche Lagereinrichtungen jeweils einen Hebel (32) aufweisen, die sowohl an dem Führungselement als auch am Schiebedeckel in einem Drehlager (30, 31) befestigt sind, wobei das schiebedeckelseitige Drehlager (30) eine Lagerachse (38) aufweist, die mit ihrem einen Ende in eine Steuerbahn (45) für die Schiebedeckelhubbewegung hineinragt und an diesem Ende mit einer gestuften Lagerhülse (45) versehen ist, **dadurch gekennzeichnet, dass** zwischen der Lagerhülse (48) und dem Hebel (32) eine Federeinrichtung (52) angeordnet ist, die einen Ringkragen (50) der gestuften Lagerhülse (48) auf einen die Steuerbahn (45) begrenzenden Rand (51) drängt, wodurch der Schiebedeckel (18) in seiner Schließstellung (St) zwischen Steuerbahnen (45) eingespannt wird.

2. Dachanordnung nach Anspruch 1, **dadurch gekennzeichnet, dass** der Schiebedeckel (18) an seiner dem Fahrzeuginnenraum (25) zugewandten Seite (33) einen, vorzugsweise vollständig umlaufenden, am Deckelrandbereich (35) befestigten Stützrahmen (34) umfasst.

3. Dachanordnung nach einem der vorhergehenden Ansprüche, **dadurch gekennzeichnet, dass** die Lagereinrichtung (27) einen Lagerblock (37) besitzt, der an dem Stützrahmen (34) befestigt ist oder einstückig mit dem Stützrahmen (34) ausgebildet ist, und dass der Hebel (32) mit der schiebdedeckelseitigen Lagerachse (38) in einem Lagerauge (39) des Lagerblocks (37) und mit einer führungsbahnseitigen Lagerachse (40) in einem Lagerauge (41) des Führungselements (28) drehbeweglich befestigt ist.

4. Dachanordnung nach einem der vorhergehenden Ansprüche, **dadurch gekennzeichnet, dass** die erste Lagerachse (38) den Hebel (32) durchgreift und mit ihrem vom Lagerblock (37) abgewandten Ende in die die Schiebedeckelhubbewegung steuernde Steuerbahn (45) hineinragt.

5. Dachanordnung nach Anspruch 1, **dadurch gekennzeichnet, dass** die Federeinrichtung (52) durch ein Tellerfederpaket (53) gebildet ist.

6. Dachanordnung nach Anspruch 5, **dadurch gekennzeichnet, dass** das Tellerfederpaket (53) mehrere wechselseitig angeordnete Tellerfedern (54) umfasst.

7. Dachanordnung nach Anspruch 1, **dadurch gekennzeichnet, dass** die Lagerhülse (48) über eine Rasteinrichtung (55) auf der Lagerachse (38) gehalten ist.

8. Dachanordnung nach Anspruch 1, **dadurch gekennzeichnet, dass** zwischen der Lagerhülse (48) und dem Hebel (32) ein Federweg (Fw) vorgesehen ist, der so bemessen ist, dass eine Federkraftbegrenzung erreicht wird, wenn die Lagerhülse (48) am Hebel (32) anliegt.

## Claims

1. Roof arrangement (1) for a vehicle, in particular passenger vehicle (2), with a roof frame (14), a sliding cover (18) and two lateral guide tracks (23) in which the sliding cover is guided in a movable manner in order to close or at least partially open up a roof opening (24), which sliding cover interacts with a plurality of bearing devices (27), of which one end of each bearing device is coupled to the sliding cover and the other end is supported via a guide element (28) in one of the guide tracks, which bearing devices each have a lever (32) which are fastened both to the guide element and to the sliding cover in a rotary bearing (30, 31), wherein the rotary bearing (30) on the sliding-cover side has a bearing spindle (38) which projects at its one end into a control track (45) for the lifting movement of the sliding cover and is provided at this end with a stepped bearing sleeve (48), **characterized in that** a spring device (52) is arranged between the bearing sleeve (48) and the lever (32), the spring device forcing an annular collar (50) of the stepped bearing sleeve (48) onto an edge (51) bounding the control track (45), as a result of which the sliding cover (18) is clamped between control tracks (45) in its closed position (St).

2. Roof arrangement according to Claim 1, **characterized in that** the sliding cover (18), on its side (33) facing the vehicle interior (25), comprises a preferably fully encircling supporting frame (34) which is fastened to the cover edge region (35).

3. Roof arrangement according to one of the preceding claims, **characterized in that** the bearing device (27) has a bearing block (37) which is fastened to the supporting frame (34) or is formed integrally with the supporting frame (34), and **in that** the lever (32) is fastened rotatably by means of the bearing spindle (38) on the sliding-cover side in a bearing eye (39) of the bearing block (37) and by means of a bearing spindle (40) on the guide-track side in a bearing eye (41) of the guide element (28).

4. Roof arrangement according to one of the preceding claims, **characterized in that** the first bearing spindle (38) reaches through the lever (32) and projects at its end facing away from the bearing block (37) into the control track (45) which controls the lifting movement of the sliding cover.

5. Roof arrangement according to Claim 1, **characterized in that** the spring device (52) is formed by a disc spring assembly (53).

6. Roof arrangement according to Claim 5, **characterized in that** the disc spring assembly (53) comprises a plurality of disc springs (54) arranged in an alternating manner.

7. Roof arrangement according to Claim 1, **characterized in that** the bearing sleeve (48) is held on the bearing spindle (38) via a latching device (55).

8. Roof arrangement according to Claim 1, **characterized in that** a spring deflection (Fw) is provided between the bearing sleeve (48) and the lever (32) and is dimensioned in such a manner that a limitation of the spring force is achieved when the bearing sleeve (48) bears against the lever (32).

## Revendications

1. Agencement de toit (1) pour un véhicule, en particulier une voiture automobile (2), avec un châssis de toit (14), un volet coulissant (18), deux pistes de guidage latérales (23) dans lesquelles le volet coulissant est guidé en mouvement pour fermer ou ouvrir au moins en partie une ouverture de toit (24), ledit volet coulissant coopérant avec plusieurs dispositifs d'appui (27) dont chaque dispositif d'appui est d'une part articulé au volet coulissant et d'autre part appuyé dans une des pistes de guidage au moyen d'un élément de guidage (28), les dispositifs d'appui comportant chacun un levier (32) qui est fixé dans un palier rotatif (30, 31) aussi bien à l'élément de guidage qu'au volet coulissant, dans lequel le palier rotatif (30) côté volet coulissant présente un axe de palier (38), qui pénètre par sa première extrémité dans une piste de commande (45) pour le mouvement de levée du volet coulissant et est pourvu à cette extrémité d'une douille de palier étagée (48), **caractérisé en ce qu'**il se trouve, entre la douille de palier (48) et le levier (32), un dispositif de ressort (52) qui pousse un collet annulaire (50) de la douille de palier étagée (48) sur un bord (51) limitant la piste de commande (45), ce qui serre le volet coulissant (18) entre des pistes de commande (45) dans sa position de fermeture (St).

2. Agencement de toit selon la revendication 1, **caractérisé en ce que** le volet coulissant (18) comprend, sur son côté (33) tourné vers l'espace intérieur du véhicule (25), un cadre d'appui (34) fixé à la région de bord du toit (35) et l'entourant de préférence totalement.

3. Agencement de toit selon l'une quelconque des revendications précédentes, **caractérisé en ce que** le dispositif d'appui (27) comprend un bloc de support (37), qui est fixé au cadre d'appui (34) ou qui est réalisé d'une seule pièce avec le cadre d'appui (34), et **en ce que** le levier (32) est fixé en mouvement de rotation avec un axe de palier (38) côté volet coulissant dans un oeil de palier (39) du bloc de support (37) et avec un axe de palier (40) côté piste de guidage dans un oeil de palier (41) de l'élément de guidage (28).

4. Agencement de toit selon l'une quelconque des revendications précédentes, **caractérisé en ce que** le premier axe de palier (38) traverse le levier (32) et pénètre par son extrémité située à l'opposé du bloc de support (37) dans la piste de commande (45) commandant le mouvement de levée du volet coulissant.

5. Agencement de toit selon la revendication 1, **caractérisé en ce que** le dispositif de ressort (52) est formé par un paquet de rondelles élastiques (53).

6. Agencement de toit selon la revendication 5, **caractérisé en ce que** le paquet de rondelles élastiques (53) comprend plusieurs rondelles élastiques (54) disposées de manière alternée.

7. Agencement de toit selon la revendication 1, **caractérisé en ce que** la douille de palier (48) est maintenue sur l'axe de palier (38) au moyen d'un dispositif d'encliquetage (55).

8. Agencement de toit selon la revendication 1, **caractérisé en ce qu'**il est prévu entre la douille de palier (48) et le levier (32) une course de ressort (Fw), qui est dimensionnée de telle manière qu'une limitation de la force du ressort soit atteinte lorsque la douille de palier (48) est appliquée contre le levier (32).
